# EUROPEAN PATENT SPECIFICATION

(11) **EP 3 753 696 B1**
(45) Date of publication and mention of the grant of the patent: **23.02.2022**
(21) Application number: 20179892.3
(22) Date of filing: 15.06.2020
(51) Int. Cl.: B28B 7/00, B28B 7/36, B28B 11/04, B32B 3/30, B32B 7/06, B32B 7/12, B32B 9/00, B32B 9/04

(54) **A METHOD OF MAKING A WATERPROOF FLOOR SLAB ELEMENT**
VERFAHREN ZUR HERSTELLUNG EINES WASSERDICHTEN BODENPLATTENELEMENTS
PROCÉDÉ DE FABRICATION D'UN ÉLÉMENT DE DALLE DE PLANCHER ÉTANCHE À L'EAU

(30) Priority: 19.06.2019 FI 20195533
(43) Date of publication of application: 23.12.2020
(73) Proprietor: Lehto Group OYJ, 90440 Kempele (FI)
(72) Inventor: LEHTONEN, Hannu, 86300 Oulainen (FI)
(74) Representative: Berggren Oy

(56) References cited:
- WO-A1-2018/160002
- DE-C- 652 073
- JP-A- 2000 141 328

## Description

The invention relates to a method for making a waterproof floor slab element, the method comprising pouring fresh concrete mix into a mold, wherein the mold has a mold surface forming the shape of the top surface of the floor slab element, allowing the concrete mix to harden in the mold to form a floor slab element, removing the floor slab element from the mold, forming a surface structure on the top surface of the floor slab element which improves the adhesion of the waterproofing layer, and forming a waterproofing layer on the top surface of the floor slab element.

Wet room floors are usually made of concrete, and ceramic tiles are often used as the flooring. The joints of ceramic tiles are not waterproof, which is why waterproofing must be provided on the surface of the floor slab before attaching the ceramic tiles. Typically, waterproofing is provided using liquid brush-on waterproofing agents, which, when dried, form an elastic waterproof film on the surface of the floor slab.

Floor slabs can be manufactured at a prefabrication plant as floor slab elements to be installed on site as such, or the floor slab element can be part of a modular unit that is installed as a whole in the building to be constructed. At the prefabrication plant, the floor slabs are cast "upside down" in the molds, i.e. the mold surface of the bottom of the mold produces the shape of the top surface of the floor slab. The mold surface of a factory-made casting mold is very smooth, which is why the top surface of the floor slab also becomes very flat and smooth. The waterproofing does not adhere well to the smooth surface of the prefabricated floor slab, which is why the surface of the floor slab usually has to be roughened by sanding before applying the waterproofing. Sanding the floor slab surface prolongs the installation time of the waterproofing and increases the cost of installing the waterproofing.

In in-situ cast floor slabs, the top surface of the slab is rubbed with a steel trowel while the concrete is still fresh, causing water and concrete fines to rise to the surface of the slab. Rubbing reduces the water-cement ratio of the top surface of the floor slab, which improves the strength of the top surface of the hardened floor slab. In prefabricated floor slab elements made in molds, the top surface cannot be rubbed; therefore, the structure of the top surface may be left weak. The structural strength of the top surface of the floor slab element often has to be improved by applying a primer to the surface of the slab. The use of a primer increases the manufacturing costs of the floor slab element and prolongs the manufacturing time.

WO 2015057152 A1 describes a method for manufacturing a wet room floor module and a floor module made by the method. In the method, fresh concrete is poured into a casting mold having a mold surface forming the top surface of the floor module.

BE 1012572 A5 describes cast concrete structures. At least one surface of the concrete structure is roughened to improve the adhesion of the material to be subsequently installed on that surface.

WO 2018160002 A1 describes a method for manufacturing a waterproof concrete element. In the method, a waterproof film is installed on the bottom of the mold and fresh concrete is poured into the mold. Once the concrete has hardened, the element is removed from the mold, leaving the waterproof film part of the element.

DE 652 073 C discloses a method of making a floor slab element, the method comprising pouring fresh concrete mix into a mold, wherein the mold has a mold surface forming the shape of the top surface of the floor slab element, allowing the concrete mix to harden in the mold so as to form a floor slab element, removing the floor slab element from the mold, forming a surface structure on the top surface of the floor slab element, wherein said surface structure is formed by installing a porous mold fabric on the mold surface before pouring the concrete.

An object of the invention is to provide a method for manufacturing a waterinsulated floor slab element, by which method the disadvantages associated with the prior art can be reduced. The objects of the invention are achieved by a method as set out in the independent claim. Some preferred embodiments of the invention are set out in the dependent claims.

The invention relates to a method for making a waterproof floor slab element. The method comprises casting fresh concrete mix into a mold, wherein the mold has a mold surface forming the shape of the top surface of the floor slab element, allowing the concrete mix to harden in the mold to form a floor slab element, removing the floor slab element from the mold, forming a surface structure on the top surface of the floor slab element which improves the adhesion of the waterproofing material, and forming a waterproofing layer on the top surface of the floor slab element. According to a characteristic feature of the method, the surface structure is formed by installing a porous mold fabric on the mold surface before pouring the concrete. Thanks to the mold fabric, a surface structure corresponding to the surface structure of the mold fabric is formed on the top surface of the floor slab element. The surface structure of the porous mold fabric is an embossed pattern with small protrusions and recesses at a short distance from each other. The surface structure of the top surface of the floor slab element formed by the mold fabric is thus slightly rough, in contrast to the perfectly smooth and flat surface formed by the mold surface.

In a preferred embodiment of the method according to the invention, the pores of the mold fabric are permeable to water and impermeable to cement particles. When such a mold fabric is used, some of the water in the fresh concrete is absorbed into the fabric and the water-cement ratio of the concrete decreases locally in the part of the concrete casting forming the top surface of the floor slab element. The top surface of the floor slab element then becomes dense and hard and no easily detachable "dust layer" forms on the top surface.

In another preferred embodiment of the method according to the invention, the mold fabric is attached to the mold surface with a sticky tape or glue. It is possible that part of the mold fabric adheres to the surface of the floor slab element. The mold fabric adhering to the top surface of the floor slab element can be removed from the floor slab element before forming the waterproofing layer.

In yet another preferred embodiment of the method according to the invention, a waterproofing layer is formed by applying a waterproofing material in liquid form to the top surface of the floor slab element and allowing the waterproofing material to harden in order to form a water-impermeable waterproofing layer. Preferably, the liquid waterproofing material is applied to the top surface of the floor slab element with a brush and/or roller.

In yet another preferred embodiment of the method according to the invention, a waterproofing layer is formed on the surface structure of the top surface formed by the mold fabric. Thus, no measures are taken on the top surface of the floor slab element that change the shape of the top surface, affect the strength of the top surface or improve the adhesion of the waterproofing after removal from the mold. In yet another preferred embodiment of the method according to the invention, a flooring is attached to the surface of the waterproofing layer formed. The flooring may comprise ceramic tiles, dry-pressed tiles or natural stone tiles.

The invention has the advantage that it speeds up the process of providing waterproofing on the floor slab element, thus bringing about cost savings.

A further advantage of the invention is that it improves the adhesion of the waterproofing to the surface of the floor slab element.

A particular advantage of an embodiment of the invention is that it improves the strength and compactness of the top surface of the floor slab element.

The invention is described in detail below. In the description, reference is made to the accompanying drawings in which

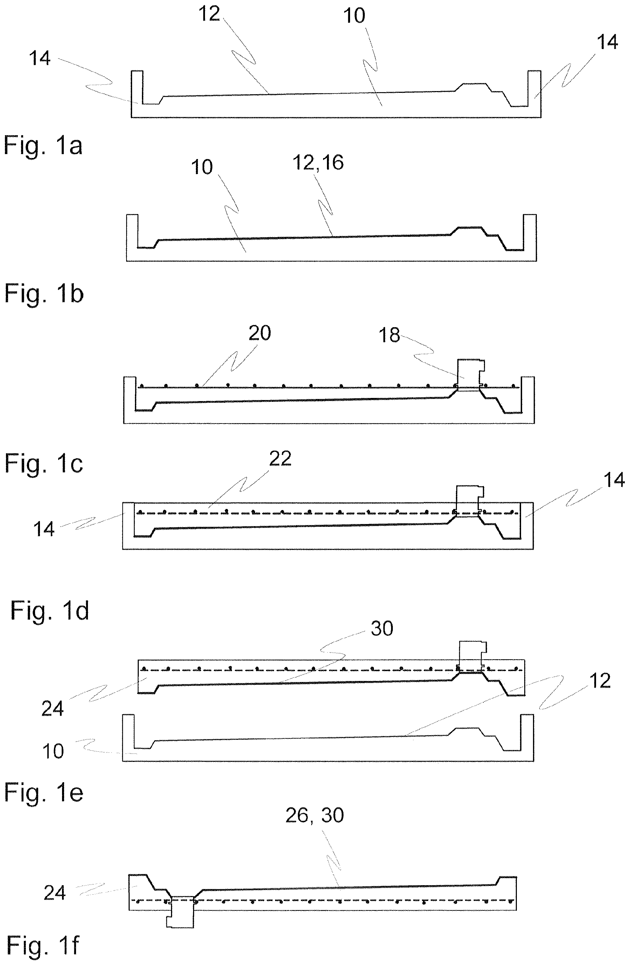

Figs. 1a to 1f show by way of example the method according to the invention as a series of images.

Figs. 1a to 1f show by way of example, by means of a series of images, the steps of the method of manufacturing a waterproof floor slab element according to the invention. The floor slab element is manufactured at a prefabrication plant by pouring fresh concrete mix into a floor slab casting mold 10. The casting mold has a substantially rectangular mold surface 12 encircled by an edge 14 so that the mold surface and the edge together form a trough-like part. When pouring concrete, the mold is in the position shown in Fig. 1a, whereby the mold surface forms the bottom of the mold. The mold surface is shaped in such a way that it is in the form of a mirror image of the top surface of the floor slab element being cast. The floor slab elements produced by the method are typically floor slabs for wet rooms, such as bathrooms, which are provided with a floor drain and the top surface of which is shaped so as to slope towards the floor drain.

In Fig. 1a, the mold is shown in cross-section. The mold may be made of metal, wood or any other suitable material. The casting mold as such is known in the art, so it will not be described in more detail here.

In the method, a mold fabric 16 is attached to the mold surface 12 of the casting mold 10 so as to cover the mold surface substantially completely (Fig. 1b). The mold fabric is attached to the mold surface with glue or adhesive tape. Preferably, the method uses a mold fabric having a sticky tape on one surface. In this case, the mold fabric can be attached to the mold surface by removing the protective film covering the sticky tape and pressing the adhesive surface of the mold fabric onto the mold surface. The mold fabric is a porous, water-permeable fabric with a surface structure that comprises small recesses and protrusions. The mold fabric may also have portions that are more dense and portions that are less dense, whereby it compresses differently at different points in the mold fabric during casting. With no load applied to it, the mold fabric can thus be a fabric that has a substantially uniform thickness and is smooth on both surfaces. The average thickness of the mold fabric can be 1-2 mm. The diameter of the holes in the pores in the mold fabric is slightly larger than the diameter of the cement particles so that the cement particles cannot pass through the mold fabric like water molecules.

After the installation of the mold fabric, the parts and equipment meant to be part of the floor slab element, such as the floor drain 18 and the reinforcing mesh 20, are attached to the mold (Fig. 1c). After that, fresh concrete mix 22 is poured into the casting mold so that the upper surface of the concrete mix layer is level with the top edge of the mold edges (Fig. 1d). The concrete mix layer is compacted by vibration and the top surface is leveled and rubbed straight. The concrete mix is allowed to cure in the casting mold so that it becomes a floor slab element 24 (Fig. 1d).

When the concrete has become sufficiently hard in the casting mold 10, the floor slab element 24 is removed from the casting mold (Fig. 1e). The surface of the floor slab element facing the mold surface 12, onto which the surface shape of the mold surface is "copied", forms the top surface 30 of the floor slab element. Any mold fabric possibly adhered to the top surface is removed from the floor slab element during removal from the mold. Thanks to the mold fabric, the surface structure of the top surface is not completely smooth, but slightly rough. Thanks to the mold fabric, the top surface of the floor slab element is hard and dense. There is also no easily detachable soft layer of cement dust on the top surface that must be removed separately by grinding, but the top surface is coatable as such. After removal from the mold, the floor slab element can be allowed to dry further under suitable conditions so that the moisture content of the concrete is low enough for coating.

When the floor slab element has dried to a suitable coating moisture, a waterproofing layer 26 is formed on its top surface by applying an evenly thick layer of liquid waterproofing material to the top surface, for example with a roller or brush (Fig. 1f). Once the waterproofing material has dried, the waterproofing layer is complete. If necessary, the waterproofing material can be applied in two or more layers, allowing the layers to dry between coats. The desired flooring, for example ceramic tiles, can be applied on top of the dried waterproofing layer.

Some preferred embodiments of the method according to the invention have been described above. The invention is not limited to the solutions described above, but the inventive idea can be applied in various ways within the scope set by the claims.

### List of reference numbers:

| | |
|---|---|
| casting mold | 10 |
| mold surface | 12 |
| edge | 14 |
| mold fabric | 16 |
| floor drain | 18 |
| reinforcing mesh | 20 |
| concrete mix | 22 |
| floor slab element | 24 |
| waterproofing layer | 26 |
| top surface | 30 |

## Claims

1. A method of making a waterproof floor slab element (24), the method comprising pouring fresh concrete mix (22) into a mold (10), wherein the mold (10) has a mold surface (12) forming the shape of the top surface of the floor slab element (24), allowing the concrete mix (22) to harden in the mold (10) so as to form a floor slab element (24), removing the floor slab element (24) from the mold (10), forming a surface structure on the top surface (30) of the floor slab element (24) which improves the adhesion of the waterproofing material, and forming a waterproofing layer (26) on the top surface (30) of the floor slab element (24), wherein said surface structure is formed by installing a porous mold fabric (16) on the mold surface (12) before pouring the concrete (22).

2. The method of claim 1, **characterized in that** the pores of the mold fabric (16) are permeable to water and impermeable to cement particles.

3. The method of claim 1 or 2, **characterized in that** the mold fabric (16) is attached to the mold surface (12) with sticky tape or glue.

4. The method of any of claims 1-3, **characterized in that** the mold fabric (16) possibly adhering to the top surface (30) of the floor slab element (24) is removed from the floor slab element (24) prior to forming the waterproofing layer (26).

5. The method of any of claims 1-4, **characterized in that** a waterproofing layer (26) is formed by applying a waterproofing material in liquid form to the top surface of the floor slab element (24) and allowing the waterproofing material to harden in order to form a water-impermeable waterproofing layer (26).

6. The method of claim 5, **characterized in that** a liquid waterproofing material is applied to the top surface (30) of the floor slab element (24) with a brush and/or roller.

7. The method of any of claims 1-6, **characterized in that** the waterproofing layer is formed on the surface structure of the top surface (30) formed by the mold fabric (16).

8. The method of any of claims 1-7, **characterized in that** a flooring is attached to the surface of the waterproofing layer (26) formed.

## Patentansprüche

1. Verfahren zur Herstellung eines wasserdichten Bodenplattenelements (24), wobei das Verfahren das Eingießen von Frischbetonmischung (22) in eine Form (10), wobei die Form (10) eine Formoberfläche (12) aufweist, die die Form der oberen Fläche des Bodenplattenelements (24) bildet, Aushärtenlassen der Betonmischung (22) in der Form (10), um ein Bodenplattenelement (24) zu bilden, Entnehmen des Bodenplattenelements (24) aus der Form (10), Ausbilden einer Oberflächenstruktur auf der oberen Oberfläche (30) des Bodenplattenelements (24), die die Haftung des wasserdichten Materials verbessert, und Ausbilden einer wasserdichten Schicht (26) auf der oberen Oberfläche (30) des Bodenplattenelements (24) umfasst, wobei die Oberflächenstruktur durch Anbringen eines porösen Formgewebes (16) auf der Formoberfläche (12) vor dem Gießen des Betons (22) gebildet wird.

2. Verfahren nach Anspruch 1, **dadurch gekennzeichnet, dass** die Poren des Formgewebes (16) wasserdurchlässig und für Zementpartikel undurchlässig sind.

3. Verfahren nach Anspruch 1 oder 2, **dadurch gekennzeichnet, dass** das Formgewebe (16) mit Klebeband oder Kleber an der Formoberfläche (12) befestigt wird.

4. Verfahren nach einem der Ansprüche 1 bis 3, **dadurch gekennzeichnet, dass** das eventuell an der oberen Oberfläche (30) des Bodenplattenelementes (24) anhaftende Formgewebe (16) vom Bodenplattenelement (24) vor dem Ausbilden der wasserdichten Schicht (26) entfernt wird.

5. Verfahren nach einem der Ansprüche 1 bis 4, **dadurch gekennzeichnet, dass** eine wasserdichte Schicht (26) durch Aufbringen eines wasserdichten Materials in flüssiger Form auf die Oberseite des Bodenplattenelements (24) und Aushärtenlassen des wasserdichten Materials gebildet wird, um eine wasserundurchlässige wasserdichte Schicht (26) zu bilden.

6. Verfahren nach Anspruch 5, **dadurch gekennzeichnet, dass** ein flüssiges wasserdichtes Material mit einem Pinsel und/oder einer Rolle auf die obere Oberfläche (30) des Bodenplattenelements (24) aufgetragen wird.

7. Verfahren nach einem der Ansprüche 1 bis 6, **dadurch gekennzeichnet, dass** die wasserdichte Schicht auf der durch das Formgewebe (16) gebildeten Oberflächenstruktur der oberen Oberfläche (30) gebildet wird.

8. Verfahren nach einem der Ansprüche 1-7, **dadurch gekennzeichnet, dass** an der Oberfläche der gebildeten wasserdichten Schicht (26) ein Bodenbelag angebracht wird.

## Revendications

1. Procédé de fabrication d'un élément de dalle de plancher étanche (24), le procédé comprenant le coulage d'un mélange de béton frais (22) dans un moule (10), dans lequel le moule (10) a une surface de moule (12) constituant la forme de la surface supérieure de l'élément de dalle de plancher (24), le fait de permettre au mélange de béton (22) de durcir dans le moule (10) de manière à former un élément de dalle de plancher (24), le retrait de l'élément de dalle de plancher (24) du moule (10), la formation d'une structure de surface sur la surface supérieure (30) de l'élément de dalle de plancher (24) qui améliore l'adhérence du matériau d'étanchéité, et la formation d'une couche d'étanchéité (26) sur la surface supérieure (30) de l'élément de dalle de plancher (24), dans lequel ladite structure de surface est formée en installant un tissu moulé poreux (16) sur la surface de moule (12) avant le coulage du béton (22).

2. Procédé selon la revendication 1, **caractérisé en ce que** les pores du tissu moulé (16) sont perméables à l'eau et imperméables aux particules de ciment.

3. Procédé selon la revendication 1 ou 2, **caractérisé en ce que** le tissu moulé (16) est fixé à la surface de moule (12) avec du ruban adhésif ou de la colle.

4. Procédé selon l'une quelconque des revendications 1 à 3, **caractérisé en ce que** le tissu moulé (16) adhérant éventuellement à la surface supérieure (30) de l'élément de dalle de plancher (24) est retiré de l'élément de dalle de plancher (24) avant la formation de la couche d'étanchéité (26) .

5. Procédé selon l'une quelconque des revendications 1 à 4, **caractérisé en ce qu'**une couche d'étanchéité (26) est formée en appliquant un matériau d'étanchéité sous forme liquide sur la surface supérieure de l'élément de dalle de plancher (24) et en permettant au matériau d'étanchéité de durcir afin de former une couche d'étanchéité (26) imperméable à l'eau.

6. Procédé selon la revendication 5, **caractérisé en ce qu'**un matériau d'étanchéité liquide est appliqué sur la surface supérieure (30) de l'élément de dalle de plancher (24) avec une brosse et/ou un rouleau.

7. Procédé selon l'une quelconque des revendications 1 à 6, **caractérisé en ce que** la couche d'étanchéité est formée sur la structure de surface de la surface supérieure (30) formée par le tissu moulé (16).

8. Procédé selon l'une quelconque des revendications 1 à 7, **caractérisé en ce qu'**un revêtement de sol est fixé à la surface de la couche d'étanchéité (26) formée.
